# EUROPEAN PATENT APPLICATION

(11) **EP 4 806 962 A1**
(43) Date of publication of application: **16.09.2026**
(21) Application number: 26162375.5
(22) Date of filing: 04.03.2026
(51) Int. Cl.: C09D 11/326, C09D 11/107, C09D 11/322, C09D 11/38

(54) **INKJET INK**

(30) Priority: 14.03.2025 JP 2025041319
(71) Applicant: KYOCERA Document Solutions Inc., Osaka-shi, Osaka 540-8585 (JP)
(72) Inventor: OZAWA, Noriaki, Osaka-shi, Osaka, 540-8585 (JP)
(74) Representative: Viering, Jentschura & Partner mbB Patent- und Rechtsanwälte

(57) **Abstract**

An inkjet ink includes: a pigment; a cyclohexylmethacrylate/methacrylic acid block copolymer having an acid value of 200 mg KOH/g or more and 240 mg KOH/g or less; and water. A weight ratio of the cyclohexylmethacrylate/methacrylic acid block copolymer to the pigment is 0.05 or more and 0.1 or less. The inkjet ink has surface tension of 28 mN/m or more and 30 mN/m or less.

## Description

### Field

The present disclosure relates to an inkjet ink.

### Background

In inkjet recording apparatuses, a certain degree of wet-spreadability on a recording medium is necessary to form high-quality images without unevenness on the recording medium. In general, in inkjet inks, it is effective to reduce surface tension using a surfactant or the like to enhance the wet-spreadability on the recording medium.

### Summary

According to an embodiment of the present disclosure, there is provided an inkjet ink, including: a pigment; a cyclohexylmethacrylate/methacrylic acid block copolymer having an acid value of 200 mg KOH/g or more and 240 mg KOH/g or less; and water.

A weight ratio of the cyclohexylmethacrylate/methacrylic acid block copolymer to the pigment is 0.05 or more and 0.1 or less.

The inkjet ink has surface tension of 28 mN/m or more and 30 mN/m or less.

### Detailed Description

In inkjet inks, generally, the lower the surface tension, a satellite droplet separated from a main droplet is more likely to be generated when ejected from a recording head. Therefore, in inkjet inks having low surface tension, for example, defects such as a decrease in image quality due to satellite droplets impacted around the position of the recording medium at which the main droplet impacts on the recording medium are likely to occur.

In view of the circumstances as described above, it is an object of the present disclosure to provide an inkjet ink capable of achieving both wet-spreadability on a recording medium and a coalesce property during ejection.

An embodiment of the present disclosure will be described.

### [Configuration of ink]

### (Schematic configuration)

An inkjet ink according to an embodiment of the present disclosure (hereinafter, also referred to simply as an "ink") includes: a pigment a; a pigment dispersion resin b; and water. Further, it is favorable that the ink according to this embodiment further include a surfactant c. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

The ink according to this embodiment is configured to have low surface tension in order to improve wet-spreadability on a recording medium. Specifically, the surface tension is 30 mN/m or less, favorably 29 mN/m or less. In the ink according to this embodiment, high dispersion stability can also be achieved by keeping the surface tension low in this way. Note that in this embodiment, the surface tension is measured by a high-precision surface tension meter "DY-700" manufactured by Kyowa Interface Science Co., Ltd.

In the ink according to this embodiment, a cyclohexylmethacrylate/methacrylic acid block copolymer is used as the pigment dispersion resin b. In general, in inks, when the pigment dispersion resin is adsorbed on the pigment, the viscosity decreases due to the loss of viscosity of the pigment dispersion resin adsorbed on the pigment. In this regard, in the ink according to this embodiment, the action of cyclohexylmethacrylate forming a hydrophobic segment allows the adsorption of the pigment dispersion resin b on the pigment a to be improved, and thus, low viscosity is achieved. In the ink according to this embodiment, in addition to the viscosity decrease by the action of the pigment dispersion resin b, it is possible to ensure a property that makes it difficult to generate satellite droplets and is easy to coalesce as one liquid droplet when ejected from a recording head (hereinafter, referred to as a "coalesce property") by setting the surface tension to 28 mN/m or more.

Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

In the ink according to this embodiment, the content of the pigment a is favorably 3 mass% or more and 7 mass% or less (in the case where the pigment concentration is 15 mass%, the content of the pigment dispersion is 20 mass% or more and 46.7 mass% or less).

### (Pigment dispersion resin b)

In the ink according to this embodiment, the pigment dispersion resin b is blended as a dispersant that is adsorbed on the surface of the pigment a to enhance the dispersibility of the pigment a in the solvent. In the ink according to this embodiment, fine particles of a cyclohexylmethacrylate/methacrylic acid block copolymer are used as the pigment dispersion resin b. In the pigment dispersion resin b, cyclohexylmethacrylate forms a hydrophobic segment and methacrylic acid forms a hydrophilic segment.

The pigment dispersion resin b loses its inherent viscosity when adsorbed on the pigment a. In the inkjet ink according to this embodiment, the action of cyclohexylmethacrylate forming a hydrophobic segment allows the adsorption of the pigment dispersion resin b on the pigment a to be improved. In particular, in the ink according to this embodiment, by using a cyclohexylmethacrylate/methacrylic acid copolymer forming the dispersion resin b, which has a block sequence, the pigment dispersion resin b is easily adsorbed on the pigment a even in a configuration in which the content of the pigment dispersion resin b is low. As a result, in the ink according to this embodiment, low viscosity as well as high dispersion stability can be achieved. In the ink according to this embodiment, since such an action of the pigment dispersion resin b allows the viscosity to be kept low, a satellite droplet is less likely to be generated and a liquid droplet having a high coalesce property tends to be generated when ejected from a recording head.

In the ink according to this embodiment, in order to achieve high wet-spreadability on a recording medium, the pigment dispersion resin b has an acid value of 240 mg KOH/g or less. Further, in the ink according to this embodiment, in order to achieve high dispersion stability, the pigment dispersion resin b has an acid value of 200 mg KOH/g or more.

Further, in the ink according to this embodiment, in order to sufficiently achieve the effect of the above pigment dispersion resin b, a weight ratio b/a of the pigment dispersion resin b to the pigment a is 0.05 or more. Further, in the ink according to this embodiment, in order to prevent the viscosity from increasing due to the presence of the pigment dispersion resin b that is not adsorbed on the pigment a, the weight ratio b/a of the pigment dispersion resin b to the pigment a is 0.1 or less.

### (Surfactant c)

In the ink according to this embodiment, the surfactant c may be blended to achieve surface tension of 30 mN/m or less. The surfactant c has the effect of enhancing the wettability of the ink on a recording medium and the effect of enhancing the compatibility and dispersion stability of each component included in the ink. Examples of the surfactant c blended in the ink according to this embodiment include an anionic surfactant, a cationic surfactant, a non-ionic surfactant, and an amphoteric surfactant. The surfactant c is favorably a non-ionic surfactant. The non-ionic surfactant is favorably a surfactant having an acetylene bond, more favorably a surfactant having an acetylene glycol structure or an acetylene alcohol structure.

In the ink according to this embodiment, the content of the surfactant c is favorably 0.50 mass% or more and 2.0 mass% or less.

### (Water)

In the ink according to this embodiment, ion exchanged water, purified water, distilled water, or the like can be used as water. In the ink according to this embodiment, the content of water is favorably 30 mass% or more and 60 mass% or less from the viewpoints of dryness and ejection reliability.

### (Other components)

In the ink according to this embodiment, components other than the above may be blended as necessary. For example, in the ink according to this embodiment, a surfactant can be used as a dispersant having the effect of enhancing the dispersibility of the pigment a in the solvent. The surfactant blended as a dispersant is blended separately from the surfactant c, and reduces the interfacial tension between the pigment a and the solvent, thereby enhancing the dispersibility of the pigment a in the solvent. As such a surfactant, for example, a non-ionic surfactant or an anionic surfactant can be used.

Further, in the ink according to this embodiment, various additives such as a water-soluble moisturizing agent, a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Example]

Inks were prepared and evaluated as Examples 1 to 4 of the present disclosure. Note that the following Examples are merely examples of the present disclosure, and the configuration of the present disclosure is not limited to those in Examples.

### <Evaluation method>

First, an ink evaluation method common to Examples 1 to 4 will be described. As evaluation of inks according to Examples 1 to 4, dispersion stability, a coalesce property, and wet-spreadability were evaluated.

### •Method of evaluating wet-spreadability

In the evaluation of wet-spreadability, an inkjet recording apparatus (line type, manufactured by KYOCERA Document Solutions Inc.) was used as a tester, and copy paper ("Color Copy A4 90g/m²" manufactured by Mondi plc) was used as a recording medium. Using the tester, the drive voltage was set such that the amount of ink to be ejected from one recording head was 11 pL and an image of 10 straight lines (one-dot lines) was formed on the recording medium. For each of the 10 straight lines appearing as an image on the recording medium dried overnight after forming the image, the line width was measured by application measurement (line measurement) of an optical microscope ("MM-800" manufactured by Nikon Corporation), and the average value of the line widths of the 10 straight lines was used as an evaluation value for the wet-spreadability of each ink. Using the evaluation value for wet-spreadability, evaluation was performed in accordance with the following criteria A and B. Inks with the evaluation of A for the wet-spreadability are evaluated to "Pass", and inks with the evaluation of B are evaluated to "Fail".
A (Good): 75 µm or more
B (Poor): less than 75 µm

### •Method of evaluating coalesce property

In the evaluation of a coalesce property, the length of a splash appearing in the image recorded on the recording medium with each ink was measured. That is, assuming that a splash was formed by satellite droplets, it was determined in each ink that the shorter the length of the splash, the higher the coalesce property, and the longer the length of the splash, the lower the coalesce property. In the measurement of the length of the splash, using an inkjet recording apparatus ("TASKalfa Pro 15000c" manufactured by KYOCERA Document Solutions Inc.), the margins of a recording medium (A4 size paper) were set to 5 mm and a straight line image (dot line) was formed thereon. The length of the splash extending from the dot line in the conveying direction was measured, and the maximum value was used as an evaluation value for the coalesce property. Using the evaluation value for the coalesce property of each ink, evaluation was performed in accordance with the following criteria A and B. Inks with the evaluation of A for a coalesce property are evaluated to "Pass", and inks with the evaluation of B are evaluated to "Fail".
A (Good): 0.2 mm or less
B (Poor): exceeding 0.2 mm

### •Method of evaluating dispersion stability

In the evaluation of dispersion stability, the particle size before and after drying treatment was measured for the pigment dispersion that is a complex of the pigment a on which the pigment dispersion resin b was adsorbed. In the drying treatment, the solvent components were evaporated in an oven maintained at 60°C until the mass of the ink decreased by 40%. The ratio of the change in particle size of the pigment dispersion before and after drying treatment to the particle size of the pigment dispersion before drying treatment was calculated. The calculated ratio was used as an evaluation value for the dispersion stability of each ink. Using the evaluation value for the dispersion stability of each ink, evaluation was performed in accordance with the following criteria A and B. Inks with the evaluation of A for the dispersion stability are evaluated to "Pass", and inks with the evaluation of B are evaluated to "Fail".
A (Good): 10% or less
B (Poor): exceeding 10%

### <Example 1>

### (Preparation of samples 1 to 5)

In Example 1, first, a pigment dispersion liquid including the pigment a dispersed in water was prepared. The pigment dispersion liquid was prepared by blending the pigment a, the pigment dispersion resin b, sodium hydroxide, SURFYNOL 420, and water such that the content shown in Table 1 was achieved.

**(Table 1)**

| Component | Content (mass%) |
|---|---|
| Pigment a | 15 |
| Pigment dispersion resin b | 1.0 |
| Sodium hydroxide | 0~1.0 |
| SURFYNOL 420 | 0.5 |
| Water | Remainder |

As the pigment dispersion resin b, a cyclohexylmethacrylate/methacrylic acid block copolymer (acid value: 220 mg KOH/g) was used. Sodium hydroxide was blended as a neutralizer for neutralizing the pigment dispersion resin b. SURFYNOL 420 was blended as a dispersant for enhancing the dispersibility of the pigment a in the solvent and was a non-ionic surfactant manufactured by Nissin Chemical Co., Ltd. In Example 1, Pigment Blue 15:3 ("LIONOL BLUE FG-7351" manufactured by Toyocolor Co., Ltd.) was used as the pigment a, and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS. CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. For measurement of the particle size distributions of the pigment dispersion, a diluted solution obtained by diluting the pigment dispersion liquid 300 times with ion exchanged water was measured using "Zetasizer Nano" manufactured by Sysmex Corporation.

Next, the ink according to Example 1 was prepared. The ink according to Example 1 was prepared by blending the above pigment dispersion liquid, the surfactant c, a water-soluble moisturizing agent, and water such that the content shown in Table 2 was achieved. In Example 1, "SURFYNOL 420" manufactured by Nissin Chemical Co., Ltd. was used as the surfactant c, and 3-methyl-1,5-pentanediol was used as the water-soluble moisturizing agent. Note that the content of the surfactant c was determined for each of the samples 1 to 5.

**(Table 2)**

| Component | Content (mass%) |
|---|---|
| Pigment dispersion liquid | 53.3 |
| Surfactant c | Determine for each sample |
| Water-soluble moisturizing agent | 30 |
| Water | Remainder |

In the preparation of the ink according to Example 1, the components shown in Table 2 were added in order while stirring the solvent with a stirrer. Further, each ink after stirring was filtered using a filter having a pore size of φ5 µm to remove foreign substances, dirt, coarse particles, and the like.

### (Evaluation results of samples 1 to 5)

For the samples 1 to 5 according to Example 1, wet-spreadability, a coalesce property, and dispersion stability were evaluated. Table 3 shows the content of the surfactant c, surface tension, and the evaluation results of wet-spreadability, a coalesce property, and dispersion stability for the samples 1 to 5.

**(Table 3)**

| No. | Surfactant c Content (mass%) | Surface tension (mN/m) | Evaluation results | | |
|---|---|---|---|---|---|
| | | | Wet-spreadability | Coalesce property | Dispersion stability |
| 1 | 0.5 | 31.0 | B | A | B |
| 2 | 0.7 | 29.8 | A | A | B |
| 3 | 0.9 | 29.0 | A | A | A |
| 4 | 1.1 | 28.0 | A | A | A |
| 5 | 1.3 | 27.7 | A | B | A |

As shown in Table 3, in all of the samples 2 to 4 in which the surface tension was 28 mN/m or more and 30 mN/m or less, the wet-spreadability and the coalesce property were evaluated to "Pass". Further, in the samples 3 and 4 in which the surface tension was 28 mN/m or more and 29 mN/m or less, the dispersion stability was also evaluated to "Pass". Meanwhile, in the sample 1 in which the surface tension exceeded 30 mN/m, the wet-spreadability and the dispersion stability evaluated to "Fail". Further, in the sample 5 in which the surface tension was less than 28 mN/m, the coalesce property was evaluated to "Fail".

### <Example 2>

### (Preparation of samples 6 to 11)

In Example 2, first, a pigment dispersion liquid including the pigment a dispersed in water was prepared. The pigment dispersion liquid was prepared by blending the pigment a, the pigment dispersion resin b, sodium hydroxide, SURFYNOL 420, and water such that the content shown in Table 4 was achieved. Note that the content of the pigment dispersion resin b was determined for each of the samples 6 to 11.

**(Table 4)**

| Component | Content (mass%) |
|---|---|
| Pigment a | 15 |
| Pigment dispersion resin b | Determine for each sample |
| Sodium hydroxide | 0~1.0 |
| SURFYNOL 420 | 0.7 |
| Water | Remainder |

In the samples 6 to 10, a cyclohexylmethacrylate/methacrylic acid block copolymer (acid value: 220 mg KOH/g) was used as the pigment dispersion resin b. In the sample 11, a cyclohexylmethacrylate/methacrylic acid random copolymer (acid value: 210 mg KOH/g) was used as the pigment dispersion resin b. Sodium hydroxide was blended as a neutralizer for neutralizing the pigment dispersion resin b. SURFYNOL 420 was blended as a dispersant for enhancing the dispersibility of the pigment a in the solvent and was a non-ionic surfactant manufactured by Nissin Chemical Co., Ltd. In Example 2, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 2 was prepared. The ink according to Example 2 was prepared by blending the above pigment dispersion liquid, the surfactant c, a water-soluble moisturizing agent, and water such that the content shown in Table 5 was achieved. In Example 2, "SURFYNOL 420" manufactured by Nissin Chemical Co., Ltd. was used as the surfactant c, and 3-methyl-1,5-pentanediol was used as the water-soluble moisturizing agent.

**(Table 5)**

| Component | Content (mass%) |
|---|---|
| Pigment dispersion liquid | 53.3 |
| Surfactant c | 0.8 |
| Water-soluble moisturizing agent | 30 |
| Water | Remainder |

In the preparation of the ink according to Example 2, the components shown in Table 5 were added in order while stirring the solvent with a stirrer. Further, each ink after stirring was filtered using a filter having a pore size of φ5 µm to remove foreign substances, dirt, coarse particles, and the like.

### (Evaluation results of samples 6 to 11)

For the samples 6 to 11 according to Example 2, wet-spreadability, a coalesce property, and dispersion stability were evaluated. Table 6 shows the weight ratio b/a of the pigment dispersion resin b to the pigment a, surface tension, and the evaluation results of wet-spreadability, a coalesce property, and dispersion stability for the samples 6 to 11.

**(Table 6)**

| No. | Weight ratio b/a | Surface tension (mN/m) | Evaluation results | | |
|---|---|---|---|---|---|
| | | | Wet-spreadability | Coalesce property | Dispersion stability |
| 6 | 0.02 | 29.0 | A | A | B |
| 7 | 0.04 | 29.2 | A | A | B |
| 8 | 0.06 | 29.7 | A | A | A |
| 9 | 0.10 | 29.0 | A | A | A |
| 10 | 0.12 | 29.0 | A | B | A |
| 11 | 0.04 | 30.5 | A | A | B |

As shown in Table 6, in all of the samples 8 and 9 in which the weight ratio b/a of the pigment dispersion resin b to the pigment a was 0.05 or more and 0.1 or less, of the samples 6 to 10, the wet-spreadability, the coalesce property, and the dispersion stability were evaluated to "Pass". On the other hand, in the samples 6 and 7 in which the weight ratio b/a of the pigment dispersion resin b to the pigment a was less than 0.05, the dispersion stability was evaluated to "Fail". Further, in the sample 10 in which the weight ratio b/a of the pigment dispersion resin b to the pigment a exceeded 0.1, the coalesce property was evaluated to "Fail". Further, in the sample 11 in which a cyclohexylmethacrylate/methacrylic acid random copolymer was used as the pigment dispersion resin b, the dispersion stability was evaluated to "Fail".

### <Example 3>

### (Preparation of samples 12 to 16)

In Example 3, first, a pigment dispersion liquid including the pigment a dispersed in water was prepared. The pigment dispersion liquid was prepared by blending the pigment a, the pigment dispersion resin b, sodium hydroxide, OLFINE 1010, and water such that the content shown in Table 7 was achieved.

**(Table 7)**

| Component | Content (mass%) |
|---|---|
| Pigment a | 15 |
| Pigment dispersion resin b | 0.8 |
| Sodium hydroxide | 0~1.0 |
| OLFINE E1010 | 0.5 |
| Water | Remainder |

As the pigment dispersion resin b, a cyclohexylmethacrylate/methacrylic acid block copolymer (acid value adjusted for each of the samples 12 to 16) was used. Sodium hydroxide was blended as a neutralizer for neutralizing the pigment dispersion resin b. OLFINE 1010 was blended as a dispersant for enhancing the dispersibility of the pigment a in the solvent and was a non-ionic surfactant manufactured by Nissin Chemical Co., Ltd. In Example 3, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 3 was prepared. The ink according to Example 3 was prepared by blending the above pigment dispersion liquid, the surfactant c, a water-soluble moisturizing agent, and water such that the content shown in Table 8 was achieved. In Example 3, "SURFYNOL 420" manufactured by Nissin Chemical Co., Ltd. was used as the surfactant c, and 3-methyl-1,5-pentanediol was used as the water-soluble moisturizing agent.

**(Table 8)**

| Component | Content (mass%) |
|---|---|
| Pigment dispersion liquid | 53.3 |
| Surfactant c | 0.7 |
| Water-soluble moisturizing agent | 30 |
| Water | Remainder |

In the preparation of the ink according to Example 3, the components shown in Table 8 were added in order while stirring the solvent with a stirrer. Further, each ink after stirring was filtered using a filter having a pore size of φ5 µm to remove foreign substances, dirt, coarse particles, and the like.

### (Evaluation results of samples 12 to 16)

For the samples 12 to 16 according to Example 3, wet-spreadability, a coalesce property, and dispersion stability were evaluated. Table 9 shows the acid value of the pigment dispersion resin b, surface tension, and the evaluation results of wet-spreadability, a coalesce property, and dispersion stability for the samples 12 to 16.

**(Table 9)**

| No. | Pigment dispersion resin b Acid value (mg KOH/g) | Surface tension (mN/m) | Evaluation results | | |
|---|---|---|---|---|---|
| | | | Wet-spreadability | Coalesce property | Dispersion stability |
| 12 | 180 | 29.3 | A | A | B |
| 13 | 200 | 29.6 | A | A | A |
| 14 | 220 | 29.7 | A | A | A |
| 15 | 240 | 29.2 | A | A | A |
| 16 | 250 | 29.2 | B | A | A |

As shown in Table 9, in all of the samples 13 to 15 in which the acid value of the pigment dispersion resin b was 200 mg KOH/g or more and 240 mg KOH/g or less, the wet-spreadability, the coalesce property, and the dispersion stability were evaluated to "Pass". Meanwhile, in the sample 12 in which the acid value of the pigment dispersion resin b was less than 200 mg KOH/g, the dispersion stability was evaluated to "Fail". Further, in the sample 16 in which the acid value of the pigment dispersion resin b exceeded 240 mg KOH/g, the wet-spreadability was evaluated to "Fail".

### <Example 4>

### (Preparation of samples 17 to 19)

In Example 4, first, a pigment dispersion liquid including the pigment a dispersed in water was prepared. The pigment dispersion liquid was prepared by blending the pigment a, the pigment dispersion resin b, sodium hydroxide, OLFINE 1010, and water such that the content shown in Table 10 was achieved.

**(Table 10)**

| Component | Content (mass%) |
|---|---|
| Pigment a | 15 |
| Pigment dispersion resin b | 0.8 |
| Sodium hydroxide | 0~1.0 |
| OLFINE E1010 | 0.5 |
| Water | Remainder |

In the sample 17, a cyclohexylmethacrylate (CyMMA)/methacrylic acid (MAA) block copolymer (acid value: 220 mg KOH/g) was used as the pigment dispersion resin b. In the sample 18, a styrene (St)/acrylic acid (AA) copolymer was used as the pigment dispersion resin b. In the sample 19, a benzylmethacrylate (BzMMA)/MAA copolymer was used as the pigment dispersion resin b. Sodium hydroxide was blended as a neutralizer for neutralizing the pigment dispersion resin b. OLFINE 1010 was blended as a dispersant for enhancing the dispersibility of the pigment a in the solvent and was a non-ionic surfactant manufactured by Nissin Chemical Co., Ltd. In Example 4, Pigment Blue 15:3 ("LIONOL BLUE FG-7351" manufactured by Toyocolor Co., Ltd.) was used as the pigment a, and ion exchanged water was used as water. The pigment dispersion liquid was prepared in the same manner as that in Example 1.

Next, the ink according to Example 4 was prepared. The ink according to Example 4 was prepared by blending the above pigment dispersion liquid, the surfactant c, a water-soluble moisturizing agent, and water such that the content shown in Table 11 was achieved. In Example 4, "SURFYNOL 420" manufactured by Nissin Chemical Co., Ltd. was used as the surfactant c, and 3-methyl-1,5-pentanediol was used as the water-soluble moisturizing agent.

**(Table 11)**

| Component | Content (mass%) |
|---|---|
| Pigment dispersion liquid | 53.3 |
| Surfactant c | 0.7 |
| Water-soluble moisturizing agent | 30 |
| Water | Remainder |

In the preparation of the ink according to Example 4, the components shown in Table 11 were added in order while stirring the solvent with a stirrer.
Further, each ink after stirring was filtered using a filter having a pore size of φ5 µm to remove foreign substances, dirt, coarse particles, and the like.

### (Evaluation results of samples 17 to 19)

For the samples 17 to 19 according to Example 4, wet-spreadability, a coalesce property, and dispersion stability were evaluated. Table 12 shows the type of pigment dispersion resin b, surface tension, and the evaluation results of wet-spreadability, a coalesce property, and dispersion stability for the samples 17 to 19.

**(Table 12)**

| No. | Pigment dispersion resin b Type | Evaluation results | | |
|---|---|---|---|---|
| | | Wet-spreadability | Coalesce property | Dispersion stability |
| 17 | CyMMA/MAA | A | A | A |
| 18 | St/AA | A | A | B |
| 19 | BzMMA/MAA | A | A | B |

As shown in Table 12, in the sample 17 in which a cyclohexylmethacrylate/methacrylic acid block copolymer was used as the pigment dispersion resin b, the wet-spreadability, the coalesce property, and the dispersion stability were evaluated to "Pass". Meanwhile, in all of the samples 18 and 19 in which a copolymer other than the cyclohexylmethacrylate/methacrylic acid block copolymer was used as the pigment dispersion resin b, the dispersion stability was evaluated to "Fail".

## Claims

1. An inkjet ink, comprising:
a pigment;
a cyclohexylmethacrylate/methacrylic acid block copolymer having an acid value of 200 mg KOH/g or more and 240 mg KOH/g or less; and
water,
a weight ratio of the cyclohexylmethacrylate/methacrylic acid block copolymer to the pigment being 0.05 or more and 0.1 or less,
the inkjet ink having surface tension of 28 mN/m or more and 30 mN/m or less.
